# EUROPEAN PATENT SPECIFICATION

(11) **EP 4 602 919 B1**
(45) Date of publication and mention of the grant of the patent: **22.04.2026**
(21) Application number: 25152259.5
(22) Date of filing: 16.01.2025
(51) Int. Cl.: A21C 9/04, A21C 15/00

(54) **METHOD AND APPARATUS FOR COATING A FOODSTUFF PRODUCT WITH FLOWABLE MATERIAL**
VERFAHREN UND VORRICHTUNG ZUM BESCHICHTEN EINES LEBENSMITTELPRODUKTS MIT FLIESSFÄHIGEM MATERIAL
PROCÉDÉ ET DISPOSITIF POUR REVÊTIR UN PRODUIT ALIMENTAIRE AVEC UN MATÉRIAU FLUIDE

(30) Priority: 15.02.2024 IT 202400003268
(43) Date of publication of application: 20.08.2025
(73) Proprietor: SOREMARTEC S.A., 2633 Senningerberg (LU)
(72) Inventor: DE FELICE, Patrick, L-2633 Senningerberg (LU); JUSTUS, Andre, L-2633 Senningerberg (LU)
(74) Representative: Buzzi, Notaro & Antonielli d'Oulx S.p.A.

(56) References cited:
- EP-B1- 1 226 763
- WO-A1-2023/217846
- NL-C2- 1 020 511

## Description

### Field of the invention

The present invention relates to a method and an apparatus for coating a foodstuff product with flowable material, in particular a confectionery product.

For coating foodstuff products completely with a flowable material, for example confectionery products such as biscuits, pralines, wafers, etc., in the context of industrial production, it is known to:
- provide a first conveyor for feeding a succession of rows of products in a direction of advance;
- generate a layer of flowable material on the conveying surface of a second conveyor and receive the products on the layer of flowable material generated on the conveying surface of the second conveyor so as to coat the undersides of the products with flowable material;
- feed the products received on the second conveyor in a direction of advance; and
- supply from above a flow of flowable material onto the conveying surface of the second conveyor so as to coat the upper sides of the products that are fed in the direction of advance.

For implementation of such a process, the solutions of the prior art normally comprise first means for supplying the flowable material to form the aforesaid layer of material on the conveying surface of the conveyor that are normally arranged in a region upstream of the position in which the products are received on the conveyor, and second means for supplying the flowable material to coat the upper sides of the products that are, instead, arranged downstream of the aforesaid position.

EP1226763B1 and WO2023217846A1 disclose certain prior art of possible interest as technical background.

In this context, the object of the present invention is to provide a solution that is improved as compared to known solutions. In particular, the object of the present invention is to achieve one or more of the following purposes:
- coating the products with the flowable material in an effective and complete way;
- maintaining a proper alignment of the products before and after the process of coating of the products;
- providing a solution that will enable reduction of the length of the production line; and
- providing a solution that is simple both from the constructional standpoint and from the standpoint of its operation.

In general, the present invention regards a method according to claim 1 and an apparatus according to claim 7.

The claims form an integral part of the teachings provided herein.

Further characteristics and advantages of the present invention will emerge clearly from the ensuing description with reference to the annexed drawings, which are provided purely by way of non-limiting example and in which:
- Figure 1 is a schematic illustration of an example of the method described herein;
- Figure 2 is a schematic illustration of an example of the apparatus described herein, according to a side view;

- Figure 3 illustrates the apparatus of Figure 2 according to a front view;
- Figure 4 illustrates the apparatus of Figure 2 in plan view; and

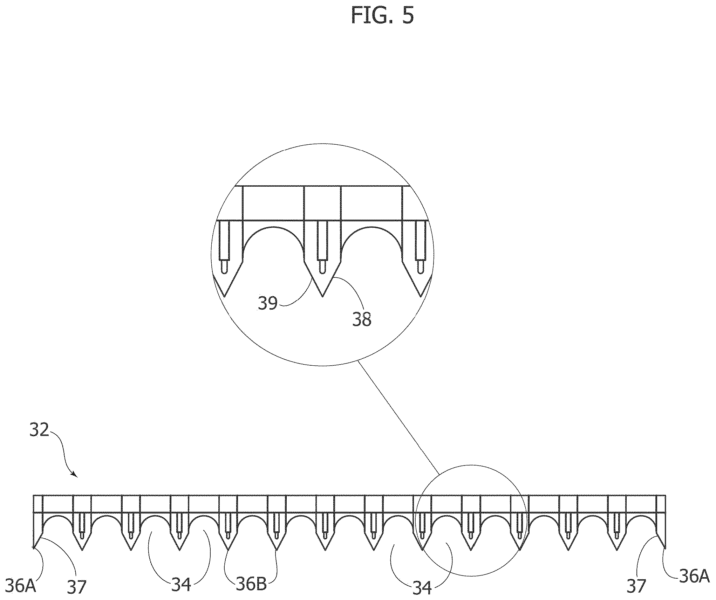

- Figure 5 illustrates a component of the apparatus of Figures 2-4 in plan view.

In the ensuing description various specific details are illustrated aimed at enabling an in-depth understanding of the embodiments. The embodiments may be obtained without one or more of the specific details, or with other methods, components, or materials, etc. In other cases, known structures, materials, or operations are not illustrated or described in detail so that various aspects of the embodiment will not be obscured.

The references used herein are provided merely for convenience and hence do not define the sphere of protection or the scope of the embodiments.

As anticipated above, the solution described herein regards a method and an apparatus for coating a foodstuff product with flowable material.

The foodstuff product may, for example, be a confectionery product, such as a biscuit, a praline, a wafer, etc.

In general, it should be noted that the teachings provided herein can be used for applications on foodstuff products of any kind.

The flowable material may be a granular material, a liquid, a creamy or pasty material, etc.

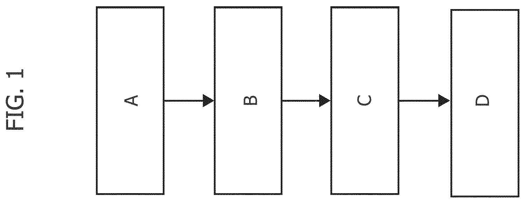

In general, the method described herein comprises the following steps (see Figure 1):
- feeding in a direction of advance a succession of rows of products oriented in a direction transverse to the direction of advance, where the products of said succession of rows are moreover arranged along a plurality of reference axes parallel to the direction of advance (step A),
   wherein said step of feed includes transferring each row of products from a first conveying surface of a first conveyor to a second conveying surface of a second conveyor, set underneath said first conveying surface and set downstream of said first conveying surface with reference to said direction of advance, said row of products being received on said second conveying surface in a first position in said direction of advance;
- supplying a group of flows of material that follow paths of supply in a direction of supply of the material opposite to the direction of advance of said succession of rows of products, said paths of supply being substantially parallel to one another and being in positions staggered, in a direction transverse to the direction of advance, with respect to the plurality of reference axes (step B),
   wherein during advance along said paths of supply said flows of said group pass through said rows of products along either side of each product of the rows themselves;
- gathering the material of said group of flows of material in said first position on said second conveying surface, forming thereon substrates of said material in positions aligned with said plurality of reference axes (step C),
   wherein said step of transferring each row of products from said first conveying surface to said second conveying surface includes arranging the products of each row on said substrates of material in said first position so that the undersides of said products will be coated with said material; and
- supplying a further flow of material or a further group of flows of material to a second position on said second conveying surface, which is located downstream of said first position in said direction of advance, wherein said further flow of material or said further group of flows of material is laid on said second conveying surface, coating the upper sides of the products of said rows that advance in the direction of advance (step D).

In one or more preferred embodiments, the aforesaid substrates are in the form of accumulations of said material.

In one or more preferred embodiments, the method comprises supplying a main flow of material in the direction of supply of the material and dividing the main flow into the aforesaid group of flows of material and into the aforesaid further group of flows of material, wherein the flows of the aforesaid group of flows of material set themselves, two by two, on either side of each flow of material of said further group of flows of material.

In view of the foregoing, the method described herein is configured for supplying the flowable material to coat the undersides of the products starting from a region above the second conveyor and shifted in the direction of advance with respect to the aforesaid first position.

The aforesaid material is supplied in the form of a plurality of separate and distinct flows of material, which flow in a direction opposite to the direction of advance of the products and are able to pass through the rows of products along either side of each product of the rows themselves so as to reach the first position without interfering with advance of the products.

The material brought into this position is then gathered to form a plurality of substrates in positions aligned with the aforesaid reference axes so that the products of the individual rows will rest on the aforesaid substrates when they are received, in the same position, on the conveying surface of the second conveyor.

In view of the foregoing, it will be understood that, according to the method described herein, it is hence no longer necessary, as instead occurs in the solutions according to the prior art, to provide the means of supply of the flowable material, for example hoppers and chutes, in a position upstream of the aforesaid first position. Incidentally, it will be noted in this connection that normally present upstream of the first position is also the first conveyor so that the space available is limited. In the solutions of the prior art, to overcome this problem, the path of the second conveyor is lengthened so that this will reach regions of the production line where it is possible to obtain greater space for installation of the means of supply of the flowable material.

The method described herein hence makes it possible to provide a production line that is less cumbersome as compared to known solutions.

The method described herein moreover makes it possible to supply the material from a single hopper, thus simplifying considerably the structure and operation of the apparatus that implements the method itself.

According to the preferred embodiment mentioned previously, the main flow of material referred to above and the two groups of flows of material into which it is then divided can be supplied via a single chute, this leading to a further simplification of the apparatus as well as to a further reduction of the corresponding encumbrance.

Finally, the method described herein enables coating of the products in a complete and effective way and at the same time maintains proper alignment of the products, which is advantageous for the subsequent stations of the production line.

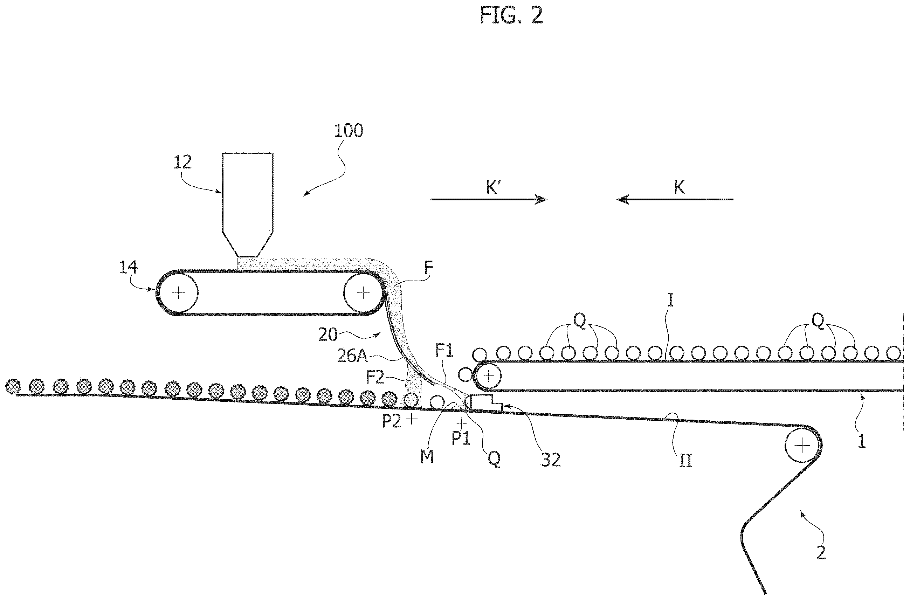

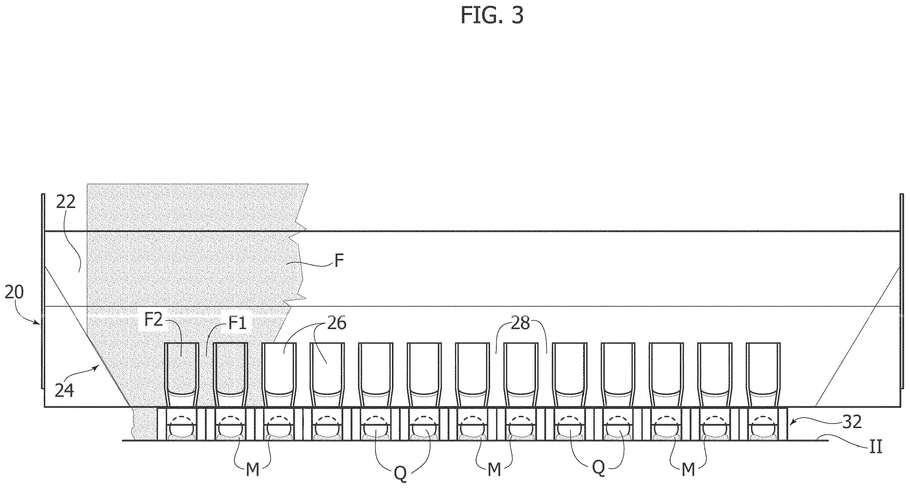

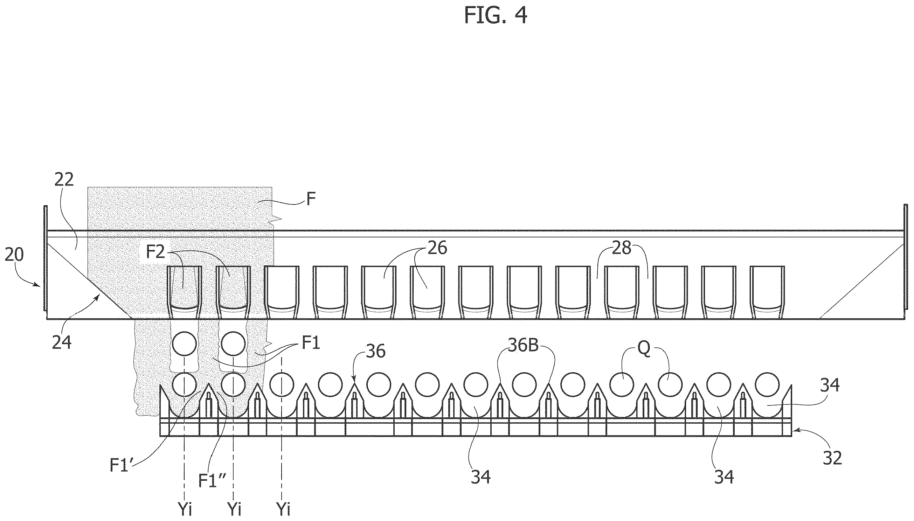

With reference now to Figures 2 to 4, these illustrate an example of the apparatus described herein for implementation of the method illustrated above.

In one or more preferred embodiments like the one illustrated, the apparatus described herein - designated as a whole by the reference number 10 in the figures - comprises:
- a first conveyor 1, defining a first conveying surface I for feeding products Q in a direction of advance K; and
- a second conveyor 2, defining a conveying surface II for feeding the products Q in the direction of advance K and comprising a part set underneath the conveyor 1 and a further part extending beyond the conveyor 1 in the direction of advance K.

The conveying surface II is located in a position lower than the conveying surface I, at least for a part of its extension.

During operation of the apparatus, the products Q are arranged on the conveying surface I according to a succession of rows oriented in a direction transverse to the direction of advance K.

Moreover, the products Q of the aforesaid rows are arranged along a plurality of reference axes Yi parallel to the direction of advance K.

When the rows of products Q reach, in succession, the downstream end of the conveyor 1, they are transferred onto the conveyor 2 as a result of a small jump from the conveying surface I of the conveyor 1 to the conveying surface II, set at a lower level, of the conveyor 2.

On the conveying surface II of the conveyor 2 each row of products is received in a position P1.

The rows of products maintain, on this surface, the same alignment as that referred to above.

In one or more preferred embodiments like the one illustrated, the apparatus 10 comprises a supply system 100 for supplying the flowable material to the conveying surface II of the conveyor 2.

In one or more preferred embodiments like the one illustrated, in the area where the supply system 100 is provided, the conveying surface II presents a stretch slightly uphill in the direction of advance K in order to favour stay, in the same area, of the material deposited thereon by the supply system 100.

In one or more preferred embodiments like the one illustrated, the supply system 100 comprises a hopper 12 configured for containing the flowable material to be supplied, and a belt conveyor 14 set underneath the hopper 12 for receiving the material delivered therefrom.

In one or more preferred embodiments like the one illustrated, the supply system further comprises a chute 20 that is configured for receiving the material supplied by the conveyor 14 and for supplying the material itself in a direction of supply K' opposite to the direction of advance K of the products.

Incidentally, it should be noted that by *direction of advance K* and *direction of supply K'* are here meant generically the directions of displacement according to a plan view of the products or of the flowable material (with reference to the example illustrated, to the left for the direction of advance K, and to the right for the direction of supply K') irrespective of whether the displacement of the products or of the material occurs in horizontal or else inclined planes.

In one or more preferred embodiments like the one illustrated, the chute 20 is set facing the first conveyor 1.

In one or more preferred embodiments like the one illustrated, the chute 20 comprises a first section 22 that receives the material from the belt conveyor 14 and supplies it by gravity according to a main flow F.

In one or more preferred embodiments like the one illustrated, the flow F has a width, in a direction transverse to the direction of supply K', that is greater than the length of the rows of products Q.

In one or more preferred embodiments like the one illustrated, the chute 20 further comprises a second section 24, which follows the section 22 in the direction of supply K' and performs the function of dividing the flow of material F into two distinct groups of flows of material F1, F2.

In particular, in one or more preferred embodiments like the one illustrated, the section 24 comprises a series of outlets 26, which are arranged in a second position P2 in the direction of advance K and are aligned with the plurality of reference axes Yi.

In one or more preferred embodiments like the one illustrated, the outlets 26 are provided with bottom openings 26A facing the conveying surface II of the conveyor 2.

The outlets 26 are configured for defining paths of supply of the material in vertical planes aligned with the plurality of reference axes Yi.

In operation, the outlets 26 generate the flows of material F2, which are deposited, from above, on the conveying surface II of the conveyor 2 to coat the upper sides of the products Q of the various rows of products while these are fed in the direction of advance K.

In one or more preferred embodiments like the one illustrated, the section 24 further comprises a series of passages 28 that extend in the direction of supply K' and are arranged, two by two, on either side of each outlet 26.

The passages 28 extend in the direction of supply K', beyond the series of outlets 26, to carry the material to the position P1 on the conveying surface II of the conveyor 2. They identify paths of supply of the material in the direction of supply K' that are located in positions staggered, in a direction transverse to the direction of advance K, with respect to the reference axes Yi.

During operation, the series of passages 28 determines the flows of material F1, which, as they reach the conveying surface II of the conveyor 2, come to pass through the rows of products Q that advance in the direction K along either side of each product Q of the rows themselves.

In one or more preferred embodiments like the one illustrated, the supply system 100 further comprises a barrier member 32, which is provided on the conveying surface II of the conveyor 2, for blocking the flows of material F1 coming from the chute 20 and gathering the corresponding material in the position P1.

In one or more preferred embodiments like the one illustrated, the barrier member 32 is configured for defining, on the conveying surface II, a series of housings 34 into which the material of the flows F1 is gathered in the form of substrates M, in particular accumulations M.

The housings 34 may be arranged in the position P1 or slightly upstream thereof; the person skilled in the sector will understand in fact that the movement of the conveying surface II acts so as to distribute the material gathered in the direction of advance K so that the accumulations M in any case tend to project from the housings 34 and hence move into the position P1 even in the case where the housings 34 are arranged slightly upstream of said position.

In one or more preferred embodiments like the one illustrated, the housings 34 are aligned with the reference axes Yi.

Consequently, the rows of products Q that are received in succession on the conveying surface II of the conveyor 2, in the position P1, come to rest directly on the accumulations of material M formed within the housings 34.

In order to direct the material that is supplied by the flows F1 into the housings 34, with respect to which, as emerges from the foregoing, the flows F1 follow paths of supply that are staggered in a transverse direction, the barrier member 32 comprises a series of deviator elements 36.

The deviator elements 36 are provided for delimiting inlets 38 to the housings 34 and directing the material towards the inside of these housings.

In one or more preferred embodiments like the one illustrated, the series of deviator elements 36 comprises two outer deviator elements 36A and two intermediate deviator elements 36B.

One deviator element 36A and the deviator element 36B adjacent thereto define the inlet 38 to the first housing 34 of the series of housings, and, likewise, the other deviator element 36A and the deviator element 36B adjacent thereto define the inlet 38 to the last housing 34 of the series of housings.

On the other hand, each deviator element 36B cooperates with the two deviator elements 36A and/or 36B adjacent thereto for delimiting, instead, the inlets 38 of two consecutive housings 34 of the series of housings.

In one or more preferred embodiments like the one illustrated, the deviator elements 36A have respective inclined surfaces 37 configured for intercepting the two outermost flows of material F1 and directing them into the two housings 34 respectively associated to the two deviator elements 36A.

In one or more preferred embodiments like the one illustrated, the deviator elements 36B each have, instead, two inclined surfaces 38, 39 that form a wedge-shaped profile in plan view, to divide a respective intermediate flow of material F1 into two partial flows F1^{I}, F1^{II}.

The two partial flows F1^{I}, F1^{II} are directed by the surfaces 38, 39 themselves into the two housings 34 associated to the individual deviator element 36B.

Preferably, the two inclined surfaces 38, 39 intersect in a vertical plane aligned with a respective passage 28 of the chute 20 in the direction of advance K.

Operation of the apparatus described above first of all envisages loading the flowable material into the hopper 12.

This material is delivered by the hopper 12 onto the conveyor belt 14, which then feeds it to the chute 20.

The material fed to the chute 20 forms by gravity the main flow of material F directed in the direction of supply K'.

At the section 24 of the chute 20, the flow F is divided into the two groups of flows F1, F2.

The flows F2 drop from above, through the outlets 26, onto the rows of products Q that move into the position P2 as they are fed in the direction of advance K. In this way, the material of the flows F2 comes to coat the upper sides of the products Q.

The flows F1 flow, instead, along the passages 28 and reach the position P1 and the barrier member 32 on the conveying surface II. During transfer from the passages 28 to the position P1, the flows F1 come to pass through the rows of the products Q along either side of each product Q of the rows themselves.

In one or more preferred embodiments like the one illustrated, the passages 28 terminate at a certain distance from the position P1, in which case the flows F1 reach this position as a result of the momentum gathered by the flows F1 during their descent down the chute 20.

At the position P1, the material of the flows F1 gathers within the housings 34 to form respective accumulations of material M.

The rows of products Q that are transferred from the conveying surface I of the conveyor 1 to the conveying surface II of the conveyor 2 deposit directly on the accumulations of material M. In this way, the material of these accumulations comes to coat the undersides of the products Q.

In view of the foregoing, the supply system 100 is able to supply the material for coating the products Q in order to coat both the undersides and the upper sides thereof, even though it is set with its own means of supply (specifically, the hopper 12, the conveyor 14, and the chute 20) downstream of the conveyor 1 and above the conveyor 2. The aforesaid system advantageously occupies a space limited in the direction of advance K of the products Q and envisages an operation that enables an optimal production quality to be obtained and at the same time makes it possible to preserve proper alignment of the products Q to the advantage of the subsequent stations of the production line.

It should now be noted that in an alternative embodiment, the method and apparatus described herein can be configured for coating the upper sides of the products Q not through the flows of material F2 referred to above, supplied in the direction of supply K' alongside the flows of material F1, but, instead, via a single flow of material or else a group of flows of material supplied in the opposite direction, i.e., in the direction of advance K.

According to the above alternative embodiment (not illustrated), the supply system may for example envisage, underneath the hopper 12, a further belt conveyor configured for supplying a part of the material delivered by the hopper in the direction of advance K, and a second chute configured for receiving the material from the aforesaid belt conveyor and supplying a flow of material or else a plurality of flows of material to the conveying surface II of the conveyor 2 in the direction of advance K.

In a way similar to what has been illustrated above with reference to the flows F2, the aforesaid flow of material or plurality of flows of material drops from above onto the rows of products Q, in this way coming to coat the upper sides of the products Q.

Of course, without prejudice to the principle of the invention, the details of construction and the embodiments may vary, even significantly, with respect to what has been illustrated herein purely by way of non-limiting example, without thereby departing from the scope of the invention, as defined by the annexed claims.

## Claims

1. A method for coating a foodstuff product with flowable material, the method comprising:
- feeding in a direction of advance (K) a succession of rows of products (Q) oriented in a direction transverse to the direction of advance (K), wherein the products of said succession of rows are moreover arranged along a plurality of reference axes (Yi) parallel to the direction of advance,
wherein said step of feed includes transferring each row of products from a first conveying surface (I) of a first conveyor (1) to a second conveying surface (II) of a second conveyor (2), set underneath said first conveying surface (I) and set downstream of said first conveying surface with reference to said direction of advance (K), said row of products being received on said second conveying surface (II) in a first position (P1) in said direction of advance,
- supplying a group of flows of flowable material (F1) that follow paths of supply in a direction of supply (K') opposite to the direction of advance (K) of said succession of rows of products, said paths of supply being parallel to one another and being in positions staggered, in a direction transverse to the direction of advance, with respect to the plurality of reference axes (Yi),
wherein, during advance along said paths of supply, said flows of said group (F1) pass through said rows of products (Q) along either side of each product of the rows themselves;
- gathering the material of said group of flows of material in said first position (P1) on said second conveying surface (II), forming thereon substrates of said material (M) in positions aligned with said plurality of reference axes (Yi),
wherein said step of transferring each row of products from said first conveying surface (I) to said second conveying surface (II) includes arranging the products of each row on said substrate of material (M) in said first position (P1) so that the undersides of said products will be coated with said material; and
- supplying a further flow of material or a further group of flows of material (F2) to a second position (P2) on said second conveying surface (II) that is located downstream of said first position (P1) in said direction of advance (K), wherein said further flow of material or said further group of flows of material (F2) deposits on said second conveying surface (II) to coat the upper sides of the products of said rows that are fed in the direction of advance (K).

2. The method according to claim 1, comprising supplying a main flow of material (F) in the direction of supply (K') of the material and dividing the main flow into said group of flows of material (F1) and into said further group of flows of material (F2), wherein the flows of said group of flows of material (F1) set themselves, two by two, on either side of each flow of material of said further group of flows of material (F2).

3. The method according to claim 1 or claim 2, wherein said step of gathering the material of said group of flows of material (F1) in said first position (P1) on said second conveying surface (II) includes gathering said material by way of a barrier member (32) provided on said second conveying surface (II) of said second conveyor (2) to block said group of flows of material (F1) in said first position (P1).

4. The method according to claim 3, wherein said material is gathered in the form of substrates within housings (34) that are defined on said second conveying surface (II) by said barrier member (32) and are aligned with said plurality of reference axes (Yi).

5. The method according to claim 4, wherein said group of flows of material (F1) are deviated into said housings (34) by way of deviator elements (36) provided on said barrier member (32).

6. The method according to claim 2, wherein supplying a main flow of material (F) in the direction of supply (K') of the material includes supplying said material to a chute (20) positioned above said second conveying surface (II) of said second conveyor (2) and configured for supplying by gravity said material in said direction of supply (K'), and wherein dividing the main flow (F) into said group of flows of material (F1) and into said further group of flows of material (F2) includes:
- supplying a part of the material of said main flow (F) to a series of outlets (26) of said chute (20) that are arranged in said second position (P2) and are aligned with said plurality of reference axes (Yi), the material supplied through said outlets (26) constituting said further group of flows of material (F2); and
- supplying the other part of the material of said main flow (F) to a series of passages (28) that are arranged, two by two, at the opposite ends of said series of outlets (26), the material supplied through said passages (28) constituting said group of flows of material (F1).

7. An apparatus (10) for coating a foodstuff product with flowable material, the apparatus comprising:
- a conveying system (1, 2) for feeding in a direction of advance (K) a succession of rows of products (Q) oriented in a direction transverse to the direction of advance (K), wherein the products of said succession of rows are arranged along a plurality of reference axes (Yi) parallel to the direction of advance (K),
wherein said conveying system includes a first conveyor (1) defining a first conveying surface (I) and a second conveyor (2) defining a second conveying surface (II) set downstream of said first conveying surface (I) with reference to said direction of advance (K) and underneath said first conveying surface (I), and
wherein each row of products (Q) is transferred from said first conveying surface (I) to said second conveying surface (II) and is received on said second conveying surface (II) in a first position (P1) in said direction of advance (K); and
- a system for supply (100) of flowable material configured to:
- supply a group of flows of material (F1) that follow paths of supply in a direction of supply (K') opposite to the direction of advance (K) of said succession of rows of products, said paths of supply being parallel to one another and being in positions staggered, in a direction transverse to the direction of advance, with respect to the plurality of reference axes (Yi);
- gather the material of said group of flows of material in said first position (P1) on said second conveying surface (II), forming thereon substrates of said material in positions aligned with said plurality of reference axes (Yi) in order to coat undersides of the products of the rows of products that deposit on said substrates (M) when they are received in said first position (P1) on said second conveying surface (II); and
- supply a further flow of material or a further group of flows of material (F2) to a second position (P2) on said second conveying surface (II) that is located downstream of said first position (P1) in said direction of advance (K) in order to coat upper sides of the products (Q) of the rows of products that reach said second position (P2) as they advance in said direction of advance (K).

8. The apparatus according to claim 7, wherein said supply system (100) comprises a chute (20) positioned above said second conveying surface (II) of said second conveyor (2) and configured to supply by gravity said material in said direction of supply (K'), wherein said chute (20) comprises a distribution sector (24), which includes:
- a series of outlets (26) arranged in said second position (P2) on said second conveying surface (II) and aligned with said plurality of reference axes (Yi), and
- a series of passages (28) arranged, two by two, on either side of each outlet (26) of said series of outlets and configured to supply said material to said first position (P1) on said second conveying surface (II) of said second conveyor (2).

9. The apparatus according to claim 7 or claim 8, wherein said supply system (100) comprises a barrier member (32) provided on said second conveying surface (II) for blocking said group of flows of material (F1) in said first position (P1) so as to gather the corresponding material in said first position (P1).

10. The apparatus according to claim 9, wherein said barrier member (32) is configured to define on said second conveying surface (II), in said first position (P1), a series of housings (34) aligned with said plurality of reference axes (Yi), within which said material is gathered in the form of substrates (M).

11. The apparatus according to claim 10, wherein said barrier member (32) includes a series of deviator elements (36) configured to delimit inlets (38) to said housings (34) and to direct the material of said group of flows of material (F1) towards the inside of said housings (34).

12. The apparatus according to claim 11, wherein said series of deviator elements (36) comprises:
- two outer deviator elements (36A), which have respective inclined surfaces (37) configured to intercept two outer flows of material of said group of flows of material (F1) and direct them, respectively, into two outer housings (34) of said series of housings;
- intermediate deviator elements (36B), each having a wedge-shaped profile in plan view for dividing a respective flow of material (F1) of said group of flows of material into two partial flows (F1^{I}, F1^{II}) that are directed by the deviator element into two consecutive housings (34) of said series of housings (34).

13. The apparatus according to any one of claims 7 to 12, configured to implement a method according to any one of claims 1 to 6.

## Patentansprüche

1. Ein Verfahren zum Beschichten eines Lebensmittelprodukts mit fließfähigem Material, wobei das Verfahren umfasst:
- Zuführen einer Folge von Reihen von Produkten (Q) in einer Vorschubrichtung (K), die in einer Richtung quer zur Vorschubrichtung (K) orientiert sind, wobei die Produkte der besagten Folge von Reihen außerdem entlang einer Vielzahl von Referenzachsen (Yi) parallel zur Vorschubrichtung angeordnet sind,
wobei der besagte Schritt des Zuführens das Übertragen jeder Produktreihe von einer ersten Förderfläche (I) eines ersten Förderers (1) auf eine zweite Förderfläche (II) eines zweiten Förderers (2) einschließt, die unterhalb der besagten ersten Förderfläche (I) und stromabwärts der besagten ersten Förderfläche in Bezug auf die besagte Vorschubrichtung (K) angeordnet ist, wobei die besagte Produktreihe auf der besagten zweiten Förderfläche (II) in einer ersten Position (P1) in der besagten Vorschubrichtung aufgenommen wird,
- Zuführen einer Gruppe von Strömen aus fließfähigem Material (F1), die Zufuhrwege in einer Zufuhrrichtung (K') entgegengesetzt zur Vorschubrichtung (K) der besagten Folge von Produktreihen folgen, wobei die besagten Zufuhrwege parallel zueinander und in Positionen versetzt, in einer Richtung quer zur Vorschubrichtung, in Bezug auf die Vielzahl von Referenzachsen (Yi) sind,
wobei während des Vorschubs entlang der besagten Zufuhrwege die besagten Ströme der besagten Gruppe (F1) durch die besagten Produktreihen (Q) entlang beider Seiten jedes Produkts der Reihen selbst hindurchtreten;
- Sammeln des Materials der besagten Gruppe von Materialströmen in der besagten ersten Position (P1) auf der besagten zweiten Förderfläche (II), wobei darauf Substrate des besagten Materials (M) in Positionen ausgebildet werden, die mit der besagten Vielzahl von Referenzachsen (Yi) ausgerichtet sind,
wobei der besagte Schritt des Übertragens jeder Produktreihe von der besagten ersten Förderfläche (I) auf die besagte zweite Förderfläche (II) das Anordnen der Produkte jeder Reihe auf dem besagten Materialsubstrat (M) in der besagten ersten Position (P1) einschließt, so dass die Unterseiten der besagten Produkte mit dem besagten Material beschichtet werden; und
- Zuführen eines weiteren Materialstroms oder einer weiteren Gruppe von Materialströmen (F2) zu einer zweiten Position (P2) auf der besagten zweiten Förderfläche (II), die stromabwärts der besagten ersten Position (P1) in der besagten Vorschubrichtung (K) liegt, wobei der besagte weitere Materialstrom oder die besagte weitere Gruppe von Materialströmen (F2) auf der besagten zweiten Förderfläche (II) abgelagert wird, um die Oberseiten der Produkte der besagten Reihen, die in der Vorschubrichtung (K) zugeführt werden, zu beschichten.

2. Das Verfahren nach Anspruch 1, umfassend das Zuführen eines Hauptstroms aus Material (F) in der Zufuhrrichtung (K') des Materials und Teilen des Hauptstroms in die besagte Gruppe von Materialströmen (F1) und in die besagte weitere Gruppe von Materialströmen (F2), wobei sich die Ströme der besagten Gruppe von Materialströmen (F1) paarweise auf beiden Seiten jedes Materialstroms der besagten weiteren Gruppe von Materialströmen (F2) anordnen.

3. Das Verfahren nach Anspruch 1 oder Anspruch 2, wobei der besagte Schritt des Sammelns des Materials der besagten Gruppe von Materialströmen (F1) in der besagten ersten Position (P1) auf der besagten zweiten Förderfläche (II) das Sammeln des besagten Materials mittels eines Barrierenelements (32) einschließt, das auf der besagten zweiten Förderfläche (II) des besagten zweiten Förderers (2) vorgesehen ist, um die besagte Gruppe von Materialströmen (F1) in der besagten ersten Position (P1) zu blockieren.

4. Das Verfahren nach Anspruch 3, wobei das besagte Material in Form von Substraten innerhalb von Aufnahmen (34) gesammelt wird, die auf der besagten zweiten Förderfläche (II) durch das besagte Barrierenelement (32) definiert und mit der besagten Vielzahl von Referenzachsen (Yi) ausgerichtet sind.

5. Das Verfahren nach Anspruch 4, wobei die besagte Gruppe von Materialströmen (F1) mittels Umlenkelementen (36), die an dem besagten Barrierenelement (32) vorgesehen sind, in die besagten Aufnahmen (34) umgelenkt werden.

6. Das Verfahren nach Anspruch 2, wobei das Zuführen eines Hauptstroms aus Material (F) in der Zufuhrrichtung (K') des Materials das Zuführen des besagten Materials zu einem Schacht (20) einschließt, der oberhalb der besagten zweiten Förderfläche (II) des besagten zweiten Förderers (2) positioniert und konfiguriert ist, um das besagte Material durch Schwerkraft in der besagten Zufuhrrichtung (K') zuzuführen, und wobei das Teilen des Hauptstroms (F) in die besagte Gruppe von Materialströmen (F1) und in die besagte weitere Gruppe von Materialströmen (F2) umfasst:
- Zuführen eines Teils des Materials des besagten Hauptstroms (F) zu einer Reihe von Auslässen (26) des besagten Schachts (20), die in der besagten zweiten Position (P2) angeordnet und mit der besagten Vielzahl von Referenzachsen (Yi) ausgerichtet sind, wobei das durch die besagten Auslässe (26) zugeführte Material die besagte weitere Gruppe von Materialströmen (F2) bildet; und
- Zuführen des anderen Teils des Materials des besagten Hauptstroms (F) zu einer Reihe von Durchlässen (28), die paarweise an den gegenüberliegenden Enden der besagten Reihe von Auslässen (26) angeordnet sind, wobei das durch die besagten Durchlässe (28) zugeführte Material die besagte Gruppe von Materialströmen (F1) bildet.

7. Eine Vorrichtung (10) zum Beschichten eines Lebensmittelprodukts mit fließfähigem Material, wobei die Vorrichtung umfasst:
- ein Fördersystem (1, 2) zum Zuführen einer Folge von Reihen von Produkten (Q) in einer Vorschubrichtung (K), die in einer Richtung quer zur Vorschubrichtung (K) orientiert sind, wobei die Produkte der besagten Folge von Reihen entlang einer Vielzahl von Referenzachsen (Yi) parallel zur Vorschubrichtung (K) angeordnet sind,
wobei das besagte Fördersystem einen ersten Förderer (1), der eine erste Förderfläche (I) definiert, und einen zweiten Förderer (2) umfasst, der eine zweite Förderfläche (II) definiert, die stromabwärts der besagten ersten Förderfläche (I) in Bezug auf die besagte Vorschubrichtung (K) und unterhalb der besagten ersten Förderfläche (I) angeordnet ist, und
wobei jede Produktreihe (Q) von der besagten ersten Förderfläche (I) auf die besagte zweite Förderfläche (II) übertragen und auf der besagten zweiten Förderfläche (II) in einer ersten Position (P1) in der besagten Vorschubrichtung (K) aufgenommen wird; und
- ein System zur Zufuhr (100) von fließfähigem Material, konfiguriert zum:
- Zuführen einer Gruppe von Materialströmen (F1), die Zufuhrwege in einer Zufuhrrichtung (K') entgegengesetzt zur Vorschubrichtung (K) der besagten Folge von Produktreihen folgen, wobei die besagten Zufuhrwege parallel zueinander und in Positionen versetzt, in einer Richtung quer zur Vorschubrichtung, in Bezug auf die Vielzahl von Referenzachsen (Yi) sind;
- Sammeln des Materials der besagten Gruppe von Materialströmen in der besagten ersten Position (P1) auf der besagten zweiten Förderfläche (II), wobei darauf Substrate des besagten Materials in Positionen gebildet werden, die mit der besagten Vielzahl von Referenzachsen (Yi) ausgerichtet sind, um Unterseiten der Produkte der Produktreihen zu beschichten, die auf den besagten Substraten (M) abgelagert werden, wenn sie in der besagten ersten Position (P1) auf der besagten zweiten Förderfläche (II) aufgenommen werden; und
- Zuführen eines weiteren Materialstroms oder einer weiteren Gruppe von Materialströmen (F2) zu einer zweiten Position (P2) auf der besagten zweiten Förderfläche (II), die stromabwärts der besagten ersten Position (P1) in der besagten Vorschubrichtung (K) liegt, um Oberseiten der Produkte (Q) der Produktreihen zu beschichten, die die besagte zweite Position (P2) erreichen, während sie sich in der besagten Vorschubrichtung (K) bewegen.

8. Die Vorrichtung nach Anspruch 7, wobei das besagte Zufuhrsystem (100) einen Schacht (20) umfasst, der oberhalb der besagten zweiten Förderfläche (II) des besagten zweiten Förderers (2) positioniert und konfiguriert ist, um das besagte Material durch Schwerkraft in der besagten Zufuhrrichtung (K') zuzuführen,
wobei der besagte Schacht (20) einen Verteilsektor (24) umfasst, der einschließt:
- eine Reihe von Auslässen (26), die in der besagten zweiten Position (P2) auf der besagten zweiten Förderfläche (II) angeordnet und mit der besagten Vielzahl von Referenzachsen (Yi) ausgerichtet sind, und
- eine Reihe von Durchlässen (28), die paarweise auf beiden Seiten jedes Auslasses (26) der besagten Reihe von Auslässen angeordnet und konfiguriert sind, um das besagte Material zu der besagten ersten Position (P1) auf der besagten zweiten Förderfläche (II) des besagten zweiten Förderers (2) zuzuführen.

9. Die Vorrichtung nach Anspruch 7 oder Anspruch 8,
wobei das besagte Zufuhrsystem (100) ein Barrierenelement (32) umfasst, das auf der besagten zweiten Förderfläche (II) zum Blockieren der besagten Gruppe von Materialströmen (F1) in der besagten ersten Position (P1) vorgesehen ist, um so das entsprechende Material in der besagten ersten Position (P1) zu sammeln.

10. Die Vorrichtung nach Anspruch 9, wobei das besagte Barrierenelement (32) konfiguriert ist, auf der besagten zweiten Förderfläche (II), in der besagten ersten Position (P1), eine Reihe von Aufnahmen (34) zu definieren, die mit der besagten Vielzahl von Referenzachsen (Yi) ausgerichtet sind, innerhalb derer das besagte Material in Form von Substraten (M) gesammelt wird.

11. Die Vorrichtung nach Anspruch 10, wobei das besagte Barrierenelement (32) eine Reihe von Umlenkelementen (36) umfasst, die konfiguriert sind, Einlässe (38) zu den besagten Aufnahmen (34) zu begrenzen und das Material der besagten Gruppe von Materialströmen (F1) in das Innere der besagten Aufnahmen (34) zu lenken.

12. Die Vorrichtung nach Anspruch 11, wobei die besagte Reihe von Umlenkelementen (36) umfasst:
- zwei äußere Umlenkelemente (36A), die jeweilige geneigte Flächen (37) aufweisen, die konfiguriert sind, zwei äußere Materialströme der besagten Gruppe von Materialströmen (F1) abzufangen und sie jeweils in zwei äußere Aufnahmen (34) der besagten Reihe von Aufnahmen zu lenken;
- mittlere Umlenkelemente (36B), die jeweils ein keilförmiges Profil in Draufsicht aufweisen, um einen jeweiligen Materialstrom (F1) der besagten Gruppe von Materialströmen in zwei Teilströme (F1^{I}, F1^{II}) zu teilen, die durch das Umlenkelement in zwei aufeinanderfolgende Aufnahmen (34) der besagten Reihe von Aufnahmen (34) gelenkt werden.

13. Die Vorrichtung nach einem der Ansprüche 7 bis 12, konfiguriert, ein Verfahren nach einem der Ansprüche 1 bis 6 zu implementieren.

## Revendications

1. Procédé pour enrober un produit alimentaire avec un matériau fluide, le procédé comprenant :
- l'alimentation dans une direction d'avance (K) d'une succession de rangées de produits (Q) orientées dans une direction transversale à la direction d'avance (K), où les produits de ladite succession de rangées sont en outre disposés le long d'une pluralité d'axes de référence (Yi) parallèles à la direction d'avance,
où ladite étape d'alimentation comprend le transfert de chaque rangée de produits d'une première surface de transport (I) d'un premier convoyeur (1) à une deuxième surface de transport (II) d'un deuxième convoyeur (2), placée sous ladite première surface de transport (I) et placée en aval de ladite première surface de transport par rapport à ladite direction d'avance (K), ladite rangée de produits étant reçue sur ladite deuxième surface de transport (II) dans une première position (P1) dans ladite direction d'avance,
- la fourniture d'un groupe de flux de matériau fluide (F1) qui suivent des chemins d'alimentation dans une direction d'alimentation (K') opposée à la direction d'avance (K) de ladite succession de rangées de produits, lesdits chemins d'alimentation étant parallèles les uns aux autres et étant dans des positions décalées, dans une direction transversale à la direction d'avance, par rapport à la pluralité d'axes de référence (Yi),
où, pendant l'avance le long desdits chemins d'alimentation, lesdits flux dudit groupe (F1) traversent lesdites rangées de produits (Q) de part et d'autre de chaque produit des rangées elles-mêmes ;
- le rassemblement du matériau dudit groupe de flux de matériau dans ladite première position (P1) sur ladite deuxième surface de transport (II), en y formant des substrats dudit matériau (M) dans des positions alignées avec ladite pluralité d'axes de référence (Yi),
où ladite étape de transfert de chaque rangée de produits de ladite première surface de transport (I) à ladite deuxième surface de transport (II) comprend l'arrangement des produits de chaque rangée sur ledit substrat de matériau (M) dans ladite première position (P1) de sorte que les faces inférieures desdits produits soient enrobées avec ledit matériau ; et
- la fourniture d'un flux supplémentaire de matériau ou d'un autre groupe de flux de matériau (F2) à une deuxième position (P2) sur ladite deuxième surface de transport (II) qui est située en aval de ladite première position (P1) dans ladite direction d'avance (K), où ledit flux supplémentaire de matériau ou ledit autre groupe de flux de matériau (F2) se dépose sur ladite deuxième surface de transport (II) pour enrober les faces supérieures des produits desdites rangées qui sont alimentés dans la direction d'avance (K).

2. Procédé selon la revendication 1, comprenant la fourniture d'un flux principal de matériau (F) dans la direction d'alimentation (K') du matériau et la division du flux principal en ledit groupe de flux de matériau (F1) et en ledit autre groupe de flux de matériau (F2), où les flux dudit groupe de flux de matériau (F1) se placent, deux par deux, de part et d'autre de chaque flux de matériau dudit autre groupe de flux de matériau (F2).

3. Procédé selon la revendication 1 ou la revendication 2, où ladite étape de rassemblement du matériau dudit groupe de flux de matériau (F1) dans ladite première position (P1) sur ladite deuxième surface de transport (II) comprend le rassemblement dudit matériau au moyen d'un élément barrière (32) prévu sur ladite deuxième surface de transport (II) dudit deuxième convoyeur (2) pour bloquer ledit groupe de flux de matériau (F1) dans ladite première position (P1).

4. Procédé selon la revendication 3, où ledit matériau est rassemblé sous forme de substrats à l'intérieur de logements (34) qui sont définis sur ladite deuxième surface de transport (II) par ledit élément barrière (32) et sont alignés avec ladite pluralité d'axes de référence (Yi).

5. Procédé selon la revendication 4, où ledit groupe de flux de matériau (F1) est dévié dans lesdits logements (34) au moyen d'éléments déviateurs (36) prévus sur ledit élément barrière (32).

6. Procédé selon la revendication 2, où la fourniture d'un flux principal de matériau (F) dans la direction d'alimentation (K') du matériau comprend la fourniture dudit matériau à une goulotte (20) positionnée au-dessus de ladite deuxième surface de transport (II) dudit deuxième convoyeur (2) et configurée pour fournir par gravité ledit matériau dans ladite direction d'alimentation (K'), et où la division du flux principal (F) en ledit groupe de flux de matériau (F1) et en ledit autre groupe de flux de matériau (F2) comprend :
- la fourniture d'une partie du matériau dudit flux principal (F) à une série de sorties (26) de ladite goulotte (20) qui sont disposées dans ladite deuxième position (P2) et sont alignées avec ladite pluralité d'axes de référence (Yi), le matériau fourni à travers lesdites sorties (26) constituant ledit autre groupe de flux de matériau (F2) ; et
- la fourniture de l'autre partie du matériau dudit flux principal (F) à une série de passages (28) qui sont disposés, deux par deux, aux extrémités opposées de ladite série de sorties (26), le matériau fourni à travers lesdits passages (28) constituant ledit groupe de flux de matériau (F1).

7. Appareil (10) pour enrober un produit alimentaire avec un matériau fluide, l'appareil comprenant :
- un système de transport (1, 2) pour alimenter dans une direction d'avance (K) une succession de rangées de produits (Q) orientées dans une direction transversale à la direction d'avance (K), où les produits de ladite succession de rangées sont disposés le long d'une pluralité d'axes de référence (Yi) parallèles à la direction d'avance (K),
où ledit système de transport comprend un premier convoyeur (1) définissant une première surface de transport (I) et un deuxième convoyeur (2) définissant une deuxième surface de transport (II) placée en aval de ladite première surface de transport (I) par rapport à ladite direction d'avance (K) et sous ladite première surface de transport (I), et
où chaque rangée de produits (Q) est transférée de ladite première surface de transport (I) à ladite deuxième surface de transport (II) et est reçue sur ladite deuxième surface de transport (II) dans une première position (P1) dans ladite direction d'avance (K) ; et
- un système d'alimentation (100) de matériau fluide configuré pour :
- fournir un groupe de flux de matériau (F1) qui suivent des chemins d'alimentation dans une direction d'alimentation (K') opposée à la direction d'avance (K) de ladite succession de rangées de produits, lesdits chemins d'alimentation étant parallèles les uns aux autres et étant dans des positions décalées, dans une direction transversale à la direction d'avance, par rapport à la pluralité d'axes de référence (Yi) ;
- rassembler le matériau dudit groupe de flux de matériau dans ladite première position (P1) sur ladite deuxième surface de transport (II), en y formant des substrats dudit matériau dans des positions alignées avec ladite pluralité d'axes de référence (Yi) afin d'enrober les faces inférieures des produits des rangées de produits qui se déposent sur lesdits substrats (M) lorsqu'ils sont reçus dans ladite première position (P1) sur ladite deuxième surface de transport (II) ; et
- fournir un flux supplémentaire de matériau ou un autre groupe de flux de matériau (F2) à une deuxième position (P2) sur ladite deuxième surface de transport (II) qui est située en aval de ladite première position (P1) dans ladite direction d'avance (K) afin d'enrober les faces supérieures des produits (Q) des rangées de produits qui atteignent ladite deuxième position (P2) lors de leur avance dans ladite direction d'avance (K).

8. Appareil selon la revendication 7, où ledit système d'alimentation (100) comprend une goulotte (20) positionnée au-dessus de ladite deuxième surface de transport (II) dudit deuxième convoyeur (2) et configurée pour fournir par gravité ledit matériau dans ladite direction d'alimentation (K'),
où ladite goulotte (20) comprend un secteur de distribution (24), qui inclut :
- une série de sorties (26) disposées dans ladite deuxième position (P2) sur ladite deuxième surface de transport (II) et alignées avec ladite pluralité d'axes de référence (Yi), et
- une série de passages (28) disposés, deux par deux, de part et d'autre de chaque sortie (26) de ladite série de sorties et configurés pour fournir ledit matériau à ladite première position (P1) sur ladite deuxième surface de transport (II) dudit deuxième convoyeur (2).

9. Appareil selon la revendication 7 ou la revendication 8,
où ledit système d'alimentation (100) comprend un élément barrière (32) prévu sur ladite deuxième surface de transport (II) pour bloquer ledit groupe de flux de matériau (F1) dans ladite première position (P1) de manière à rassembler le matériau correspondant dans ladite première position (P1).

10. Appareil selon la revendication 9, où ledit élément barrière (32) est configuré pour définir sur ladite deuxième surface de transport (II), dans ladite première position (P1), une série de logements (34) alignés avec ladite pluralité d'axes de référence (Yi), à l'intérieur desquels ledit matériau est rassemblé sous forme de substrats (M).

11. Appareil selon la revendication 10, où ledit élément barrière (32) inclut une série d'éléments déviateurs (36) configurés pour délimiter des entrées (38) vers lesdits logements (34) et pour diriger le matériau dudit groupe de flux de matériau (F1) vers l'intérieur desdits logements (34).

12. Appareil selon la revendication 11, où ladite série d'éléments déviateurs (36) comprend :
- deux éléments déviateurs extérieurs (36A), qui ont des surfaces inclinées respectives (37) configurées pour intercepter deux flux extérieurs de matériau dudit groupe de flux de matériau (F1) et les diriger, respectivement, dans deux logements extérieurs (34) de ladite série de logements ;
- des éléments déviateurs intermédiaires (36B), chacun ayant un profil en forme de coin en vue de dessus pour diviser un flux respectif de matériau (F1) dudit groupe de flux de matériau en deux flux partiels (F1^{I}, F1^{II}) qui sont dirigés par l'élément déviateur dans deux logements consécutifs (34) de ladite série de logements (34).

13. Appareil selon l'une quelconque des revendications 7 à 12, configuré pour mettre en œuvre un procédé selon l'une quelconque des revendications 1 à 6.
